## Europäisches Patentamt
## European Patent Office
## Office européen des brevets

(19)

(11) Publication number: **0 060 705**
**B1**

(12) **EUROPEAN PATENT SPECIFICATION**

(45) Date of publication of patent specification: **24.09.86**

(21) Application number: **82301299.2**

(22) Date of filing: **15.03.82**

(51) Int. Cl.⁴: **B 41 J 19/20, B 41 J 25/30, B 23 Q 5/56, F 16 H 25/24**

(54) Carrier moving mechanism.

(30) Priority: **16.03.81 JP 35380/81**

(43) Date of publication of application:
**22.09.82 Bulletin 82/38**

(45) Publication of the grant of the patent:
**24.09.86 Bulletin 86/39**

(84) Designated Contracting States:
**DE GB SE**

(56) References cited:
**DE-C- 846 647**
**FR-A-1 004 154**
**FR-A-1 352 584**
**US-A-2 857 778**
**US-A-3 186 249**
**US-A-4 019 616**

**IBM TECHNICAL DISCLOSURE BULLETIN, vol. 8, no. 10, March 1966, page 1425, New York (USA); T.D. ABBOTT et al.: "Cord tensioning device"**

(73) Proprietor: **Oki Electric Industry Company, Limited**
**7-12, Toranomon 1-chome Minato-ku**
**Tokyo 105 (JP)**

(72) Inventor: **Sasaki, Masao c/o Oki Electric Industry Co. Ltd.**
**7-12 Toranomon 1-chome Minato-ku**
**Tokyo (JP)**

(74) Representative: **Knott, Stephen Gilbert et al MATHISEN, MACARA & CO. The Coach House 6-8 Swakeleys Road Ickenham Uxbridge Middlesex UB10 8BZ (GB)**

## Description

The present invention relates to a carrier moving mechanism for a carrier of the type where two nuts are brought into contact with confronting side faces of the thread of a screw shaft, for example, a carrier of a printer having a printing head supported thereon.

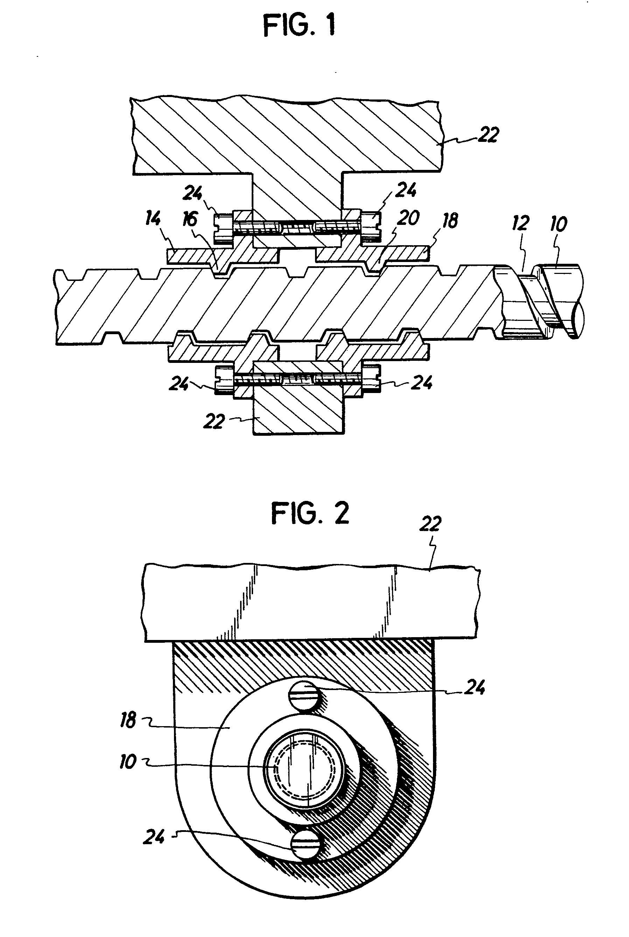

A conventional carrier moving mechanism will now be described with reference to Figs. 1 and 2 of the accompanying drawings in which:—

Fig. 1 is a sectional view of the carrier moving mechanism, and

Fig. 2 is a side view of the carrier moving mechanism.

In Figs. 1 and 2, the carrier includes a screw shaft 10 having a thread 12, a first nut 14 has teeth 16 for engagement with the thread 12 of the screw shaft 10, and a second nut 18 has teeth 20 for engagement with the thread 12 of the screw shaft 10. The first and second nuts 14 and 18 are secured by bolts 24 to a carrier 22.

In the carrier moving mechanism shown in Figs. 1 and 2, backlash is eliminated in the following manner.

First, rotation of the screw shaft 10 is restricted, and the first nut 14 is secured to the carrier 22 by the bolts 24 so that the teeth 16 of the first nut 14 are brought into contact with one side face of the thread 12 of the screw shaft 10. Then, in the same manner, the second nut 18 is secured to the carrier 22 by the bolts 24 so that the teeth 20 of the second nut 18 are brought into contact with the other side face of the thread 12 of the screw shaft 10.

If the first and second nuts 14 and 18 are thus attached to the carrier 22, so that the teeth of both the nuts 14 and 18 are brought into contact with both the side faces of the thread 12 of the screw shaft 10, respectively, the backlash can be eliminated.

In this conventional carrier moving mechanism, however, if the carrier moving mechanism is used for a long time and the teeth of both the nuts and/or both the side faces of the thread of the screw shaft wear away, the backlash is created in accordance with the degree of wearing, and readjustment becomes necessary. This is a defect of the conventional carrier moving mechanism.

An improved mechanism of this type is described in US—A—3 186 249. In this mechanism one of the nuts is not fixedly mounted to the carrier but carries a bushing with oblique flanks or steps which engage suitable mating flanks or steps on a further bushing non-rotatably secured to the carrier and biased towards the bushing carried by the nut. This arrangement of the engaging flanks is such as to resist rotation in the direction opposite to the backlash-eliminating direction and to tend to produce rotation in the backlash-eliminating direction when the carrier is being driven by the rotation of said one nut relative to the screw shaft. However in this arrangement there is considerable friction between the flanks, which is increased if dust enters between the flanks, and this results in some rotation of the bushing in the backlash-producing direction and therefore the backlash is not completely eliminated. Moreover, the flanks of the bushings can wear down preventing the backlash elimination effect from taking place.

It is therefore an object of the present invention to provide a carrier moving mechanism in which occurrence of the backlash is automatically eliminated even if the carrier moving mechanism is operated for a long time and the threads of first and second nuts and/or the side faces of the thread of a screw shaft wear away.

According to the present invention there is provided a carrier moving mechanism of the kind comprising a screw-threaded shaft and two nuts which are in threaded engagement with the shaft and which are connected to a carrier for axial movement therewith, the nuts being so arranged as to be urged against respective opposite side faces of the shaft thread so that rotation of the shaft moves the carrier, one of said nuts being fixedly mounted to the carrier and the other nut being biased for rotation in the direction eliminating backlash, characterised in that the one-way clutch means is disposed on the peripheral faces of the first and second nuts so as to inhibit rotation of the other nut in a sense opposite to the backlash-eliminating rotation direction to prevent backlash as the mechanism wears.

The following is a more detailed description of an embodiment of the invention, by way of example, with reference to the accompanying drawings, in which:—

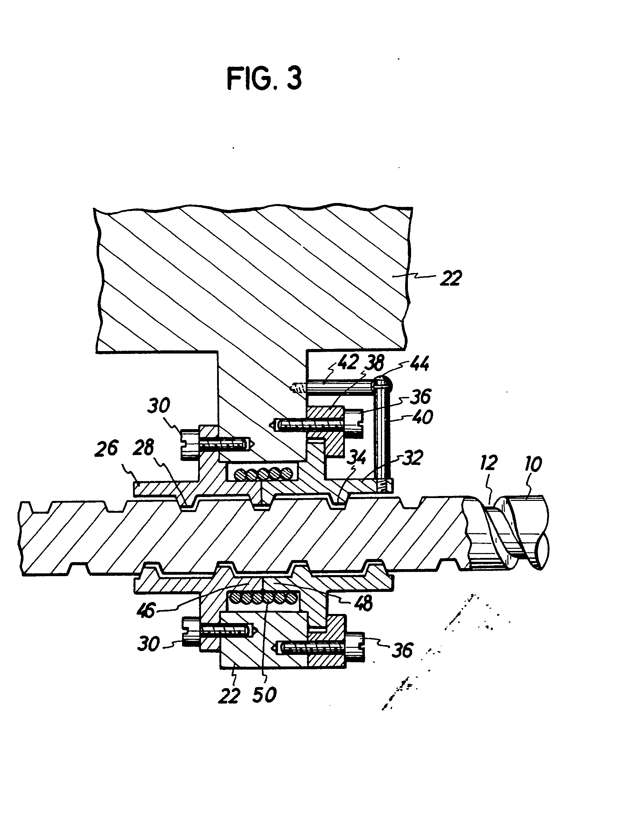

Fig. 3 is a sectional view of a carrier moving mechanism according to one embodiment of the present invention;

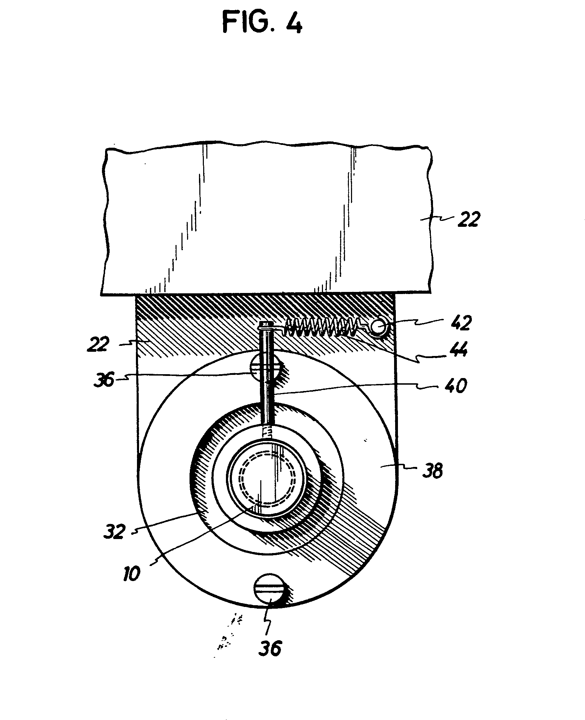

Fig. 4 is a side view of the carrier moving mechanism of Fig. 3.

Referring to Figs. 3 and 4, a screw shaft 10 has a spiral thread 12 formed on the periphery thereof and it is driven and rotated by a drive source not shown in the drawing. A carrier 22 is arranged to move along the screw shaft 10. A first nut 26 has teeth 28 for engagement with the thread 12 of the screw shaft 10 and is secured to the carrier 22 by bolts 30, so that the carrier 22 is moved by rotation of the screw shaft 10. When this first nut 26 is secured to the carrier 22, the nut 26 is fixed by the bolts 30 so that the teeth 28 of the nut 26 are brought into contact with one side face of the thread 12 of the screw shaft 10.

A second nut 32 has teeth 34 for engagement with the thread 12 of the screw shaft 10 and this second nut 32 is attached and gripped between the carrier 22 and a flange ring 38 secured thereto by means of bolts 36 so that the second nut 32 is rotatably supported but is prevented from movement relatively to the carrier 22 in the axial direction of the screw shaft 10.

A post 40 is secured to the second nut 32 and a post 42 is secured to the carrier 22, and both the post 40 and 42 are arranged so that their end portions are aligned. A spring 44 is connected to and extends between both the posts 40 and 42 to bias the second nut 32 to rotate in a clockwise direction as viewed in Fig. 4. By this arrangement, the teeth 34 of the second nut 32 are always brought into contact with the thread 12 of the screw shaft 10 on the side face of the thread opposite to the side face contacted by the teeth 28 of the first nut 26.

Both the first nut 26 and the second nut 32 have extensions 46 and 48, respectively, which are adjacent one another, and a one-way clutch spring 50 is wound around the peripheral faces of the extensions 46 and 48. When the thread 12 of the screw shaft 10 is, for example, of a right-handed thread, this one-way clutch spring 50 is also right-handedly coiled. In this way, since the one-way clutch spring 50 always acts to close the nuts 26, 32 even if the second nut 32 is tending to rotate in the counterclockwise direction in Fig. 4, this counterclockwise rotation of the second nut 32 can always be prevented.

In the above described carrier moving mechanism, the first nut 26 has its teeth 28 in contact with one side face of the thread 12 of the screw shaft 10, and the second nut 32 is rotatably biassed by the spring 44 so that the teeth 32 of the second nut 32 are always in contact with the other side face of the thread 12 of the screw shaft 10. Thus, the pressing of first nut 26 against the screw shaft 10 and of the teeth 28 against said one face of the thread 12 are maintained.

Even if the carrier moving mechanism is operated for a long time with the teeth 28 and 34 of the first and second nuts 26 and 32 in abutting contact with the side faces of the thread 12 so that these teeth 28 and 34 wear, the biassing action of the spring 44 will maintain the abutting contact of the teeth 28 and 34 of both the nuts 26 and 32 with the side faces of the thread 12 so preventing completely the occurrence of the backlash.

In the foregoing embodiment, the one-way clutch spring is used as means for preventing reverse rotation of the second nut. However, this means is not limited to such one-way clutch spring; a ratchet or other reverse rotation-preventing mechanism disposed on the peripheral faces of both nuts may be used.

As will be apparent from the foregoing description, in the carrier moving mechanism, even if the teeth of the first and second nuts and/or the side faces of the thread of the screw shaft wear away, the teeth of both the nuts are always kept in abutting contact with the side faces of the thread by biassing action of the spring. Therefore, occurrence of the backlash is prevented completely and the carrier can always be moved smoothly.

## Claims

1. A carrier moving mechanism of the kind comprising a screw-threaded shaft (10) and two nuts (26, 32) which are in threaded engagement with the shaft (10) and which are connected to a carrier (22) for movement axially of the shaft, the nut threads being urged against respective opposite side faces of the shaft thread so that rotation of the shaft moves the carrier, one (26) of said nuts being fixedly mounted to the carrier (22) and the other nut (32) being biased for rotation in the sense eliminating backlash, characterised in that one-way clutch means (50) is disposed on the peripheral faces of both nuts so as to inhibit rotation of the other nut (32) in the sense opposite to the backlash-eliminating rotation sense whereby to prevent backlash as the mechanism wears.

2. A mechanism according to claim 1, characterised in that the other said nut (32) is supported between the carrier (22) and a flange ring (38) secured to the carrier.

3. A mechanism according to claim 1 or claim 2, characterised in that the biassing applied to the other nut (32) is provided by a post (40) secured to the other said nut (32), a post (42) secured to the carrier and a spring (44) which is connected between said two posts.

4. A mechanism according to any one of claims 1 to 3, characterised in that the clutch means is a one-way clutch spring (50) surrounding the peripheral faces of the two nuts.

## Patentansprüche

1. Druckwagenantrieb der Art, die eine mit einem Schraubengewinde versehene Welle (10) und zwei mit der Welle (10) in Gewindeeingriff stehende Muttern (26, 32) aufweist, die mit einem Wagen (22) verbunden sind, um diesen in Achsrichtung der Welle zu bewegen, wobei die Gewinde der Muttern gegen entsprechende gegenüberstehende Seitenflächen des Wellengewindes gedrückt sind, so daß die Drehung der Welle den Wagen bewegt, wobei eine (26) der Muttern fest an dem Wagen (22) angebracht ist und die andere Mutter (32) in einer solchen Drehrichtung vorgespannt ist, daß toter Gang beseitigt wird, dadurch gekennzeichnet, daß eine Einwegkupplungseinrichtung (50) an den Umfangsflächen beider Muttern angeordnet ist, um eine Drehung der anderen Mutter (32) in der Richtung entgegengesetzt zu der den Totgang beseitigenden Drehrichtung zu verhindern, um dadurch Totgang zu vermeiden, wenn sich der Mechanismus abnutzt.

2. Antrieb nach Anspruch 1, dadurch gekennzeichnet, daß die andere Mutter (32) zwischen dem Wagen und einem Flanschring (38), der an dem Wagen befestigt ist, abgestützt ist.

3. Antrieb nach Anspruch 1 oder 2, dadurch gekennzeichnet, daß die Vorspannung, die der anderen Mutter (32) zugeführt wird, von einem an der genannten anderen Mutter (32) befestigten Zapfen (40), einem an dem Wagen befestigten Zapfen (42) und einer mit den zwei Zapfen verbundenen Feder (44) aufgebracht wird.

4. Antrieb nach einem der Ansprüche 1 bis 3, dadurch gekennzeichnet, daß die Kupplungseinrichtung eine Einwegkupplungsfeder (50) ist, die die Umfangsflächen der zwei Muttern umgibt.

## Revendications

1. Mécanisme de déplacement de chariot du type comprenant un arbre (10) fileté et deux écrous (26, 32) qui sont vissés sur l'arbre (10) et qui sont reliés à un chariot (22) pour un déplacement axialement à l'arbre, les taraudages des écrous étant poussés contre des faces latérales opposées respectives du filetage de l'arbre de façon que la rotation de l'arbre déplace le chariot, l'un (26) desdits écrous étant monté de manière fixe sur le chariot (22), et l'autre écrou (32) étant élastiquement sollicité en rotation dans un sens propre à éliminer tout jeu, caractérisé en ce qu'un moyen d'accouplement débrayable unidirectionnel (50) est disposé sur les face périphériques des deux écrous de façon à empêcher la rotation dudit autre écrou (32) dans le sens opposé au sens de rotation éliminant le jeu, pour ainsi empêcher l'apparition d'un jeu au fur et à mesure de l'usure de mécanisme.

2. Mécanisme selon la revendication 1, caractérisé en ce que ledit autre écrou (32) est monté entre le chariot (22) et une bague à rebord (38) fixée au chariot.

3. Mécanisme selon la revendication 1 ou 2, caractérisé en ce que la sollicitation élastique s'exerçant sur ledit autre écrou (32) est réalisée par un montant (40) fixé audit autre écrou (32), un montant (42) fixé au chariot, et un ressort (44) qui relie lesdits deux montants.

4. Mécanisme selon l'une quelconque des revendications 1 à 3, caractérisé en ce que le moyen d'accouplement débrayable est un ressort d'accouplement débrayable unidirectionnel (50) entourant les faces périphériques des deux écrous.

0 060 705

FIG. 1

FIG. 2

1

# FIG. 3

# FIG. 4

22

22

36

42

44

40

38

32

10

36